# EUROPEAN PATENT SPECIFICATION

(11) **EP 1 755 849 B1**
(45) Date of publication and mention of the grant of the patent: **17.03.2010**
(21) Application number: 05758148.0
(22) Date of filing: 03.06.2005
(51) Int. Cl.: B29C 33/40, B29C 70/46

(54) **HIGH SPEED MANUFACTURING USING SHAPE MEMORY POLYMER COMPOSITES**
HOCHGESCHWINDIGKEITSFERTIGUNG UNTER VERWENDUNG VON FORMGEDÄCHTNIS-POLYMERVERBUNDWERKSTOFFEN
FABRICATION A GRANDE VITESSE AU MOYEN DE COMPOSITES POLYMERES A MEMOIRE DE FORME

(30) Priority: 04.06.2004 US 577032 P
(43) Date of publication of application: 28.02.2007
(73) Proprietor: CORNERSTONE RESEARCH GROUP, INC., Dayton, OH 45440 (US)
(72) Inventor: HOOD, Patrick, J., Bellbrook, OH 45305 (US); STACY, Mark, A., Beavercreek, OH 45440 (US); EVERHART, Matthew, C., Fairborn, OH 45324 (US)
(74) Representative: Gervasi, Gemma
(86) International application number: PCT/US2005/019875
(87) International publication number: WO 2005/118248

(56) References cited:
- EP-A- 0 498 602
- EP-A- 0 631 862
- EP-A- 1 464 661
- EP-A2- 0 326 426
- WO-A-02/09935
- US-A- 4 053 548
- US-A- 4 675 061
- US-A- 4 950 258
- US-A- 5 804 276
- US-A- 6 083 442

## Description

### FIELD OF THE INVENTION

The present invention relates to a system for using composite materials in a shape memory polymer resin matrix to manufacture composite parts. More specifically, the present invention relates to a system and method for forming a composite fiber-reinforced polymeric structure and the use thereof to quickly and easily manufacture simple or complex parts. The present invention is particularly advantageous for forming quickly and cheaply composite structures such as structural components for automobiles, trucks, recreational vehicles, appliances, and boats.

### BACKGROUND OF THE INVENTION

The present invention generally relates to the repair of components made from material such as metals, composites, wood, plastics, glass and other materials. It is to be appreciated that the present invention has general and specific industrial application in the repair of various materials. The term "composite" is commonly used in industry to identify components produced by impregnating a fibrous material with a thermoplastic or thermosetting resin to form laminates or layers.

Generally, polymers and polymer composites have the advantages of weight saving, high specific mechanical properties, and good corrosion resistance which make them indispensable materials in all areas of manufacturing. Nevertheless, manufacturing costs are sometime detrimental, since they can represent a considerable part of the total costs and are made even more costly by the inability to quickly and easily repair these material without requiring a complete, and expensive, total replacement. Furthermore, the production of complex shaped parts is still a challenge for the composite industry. The limited potential for complex shape forming offered by advanced composite materials leaves little scope for design freedom in order to improve mechanical performance and/or integrate supplementary functions. This has been one of the primary limitations for a wider use of advanced composites in cost-sensitive large volume applications. Additionally, the nature of composite materials does not lend itself to easy repair, especially on cheap, mass produced items and repair kits for more expensive, specialty items (such as in the aeronautic industry) are bulky, expensive, and require long time to complete the repair.

Shape memory polymers (SMPs) and shape memory alloys (SMAS) were first developed about 20 years ago and have been the subject of commercial development in the last 10 years. SMPs are polymers that derive their name from their inherent ability to return to their original "memorized" shape after undergoing a shape deformation. SMPs that have been preformed can be deformed to any desired shape below or above its glass transition temperature (Tg). If it is below the Tg, this process is called cold deformation. When deformation of the SMP occurs above its Tg, the process is denoted as warm deformation. In either case the SMP must remain below, or be quenched to below, the T_{g} while being maintained in the desired deformed shape to "lock" in the deformation. Once the deformation is locked in, the polymer network cannot return to a relaxed state due to thermal barriers. The SMP will hold its deformed shape indefinitely until it is heated above its Tg, whereat the SMP stored mechanical strain is released and the SMP returns to its preformed state. While heated and pliable, SMP has the flexibility of a high-quality, dynamic elastomer, tolerating up to 400 % or more elongation; however, unlike normal elastomers, an SMP can be reshaped or returned quickly to its memorized shape and subsequently cooled into a rigid plastic.

SMPs are not simply elastomers, nor simply plastics. They exhibit characteristics of both materials, depending on their temperature. While rigid, an SMP demonstrates the strength-to-weight ratio of a rigid polymer; however, normal rigid polymers under thermal stimulus simply flow or melt into a random new shape, and they have no "memorized" shape to which they can return. While heated and pliable, an SMP has the flexibility of a high-quality, dynamic elastomer, tolerating up to 400% elongation or more; however, unlike normal elastomers, SMPs can be reshaped or returned quickly to their memorized shape and subsequently cooled into a rigid plastic.

Several known polymer types exhibit shape memory properties. Probably the best known and best researched polymer type exhibiting shape memory polymer properties is polyurethane polymers. Gordon, Proc of First Intl. Conf. Shape Memory and Superelastic Tech., 115-120 (1994) and Tobushi et al., Proc of First Intl. Conf. Shape Memory and Superelastic Tech., 109- 114 (1994) exemplify studies directed to properties and application of shape memory polyurethanes. Another polymeric system based on crosslinking polyethylene homopolymer was reported by S. Ota, Radiat. Phys. Chem. 18, 81 (1981). A styrene-butadiene thermoplastic copolymer system was also described by Japan Kokai, JP 63- 179955 to exhibit shape memory properties. Polyisoprene was also claimed to exhibit shape memory properties in Japan Kokai JP 62-192440. Another known polymeric system, disclosed by Kagami et al., Macromol. Rapid Communication, 17, 539-543 (1996), is the class of copolymers of stearyl acrylate and acrylic acid or methyl acrylate. Other SMP polymers known in the art includes articles formed of norbornene or dimethaneoctahydronapthalene homopolymers or copolymers, set forth in U.S. Patent 4,831,094. Additionally, styrene copolymer based SMPs are disclosed in U.S. Patent 6,759,481.

The time and cost of manufacturing have limited use of high-performance composites in many applications. This is particularly the case for mass produced consumer products, such as automobiles, appliances and other consumer products. Typically, a high performance composite is manufactured using a structural thermoset resin infused into an engineering fabric such as carbon fiber, graphite, glass, ceramic, Kevlar or other high-strength, tough woven fiber. In high-performance applications - those where a high-strength-to-weight ratio are needed - thermoset resins are used rather than thermoplastics. Thermoset resins have the desirable property of having a low viscosity prior to curing which allows the resin to infuse into the fabric and possess desired mechanical properties after cure such as high-modulus, toughness and strength. In many applications the high-modulus is required in order to efficiently distribute the load across all of the fibers in a composite.

One of the major costs of composite manufacturing is the amortized cost of the mold and the labor required to lay up the composite part on the mold.. It is not uncommon for a composite part to take several hours to lay up and can tie up an expensive mold for several hours while it is being cured. This fact has limited the acceptance of composites into mass produced, consumer products.

Composite structures comprising polymeric outer layers and fiber-reinforced foam cores are known in the prior art. For example, U.S. Patent 4,910,067 ("the '067 patent"), discloses a structural composite comprising polymeric outer layers, a layer of fibrous material, and a foam core. It also has been known in the prior art to manufacture this type of composite structure with two polymeric layers, two fibrous layers wherein each fibrous layer is adhesively attached to an inner wall of a respective polymeric layer, and the foam core disposed within the space between the fibrous layers. The polymeric material of the foam core exhibited both a resinous and a foaming character, such that the resinous core material penetrated the fibrous layers, and the foamed core material filled the space between the fibrous layers.

The '067 patent further discloses a method of manufacturing a structural composite comprising the steps of: forming a polymeric layer into a desired shape; treating the surface of the polymeric layer by etching and oxidation; transferring the polymeric layer to a molding surface of a mold; adhesively attaching a layer of fibrous reinforcement to an opposing molding surface of a mold; mating the molding surfaces within the mold to form a cavity therebetween; injecting a foamable polymer into the cavity; permitting the foam to expand and thereby form a fiber-reinforced polymeric composite structure; and curing the structure in the mold. Alternatively, in order to promote the penetration of the fibrous reinforcement by the foam in a resinous state, the '067 patent further discloses that the layer of fiber can be treated with a defoaming agent capable of converting the foamable polymer to a liquid.

One drawback associated with these prior art structural composites, and methods of manufacturing such structural composites, is that the relatively viscous core materials cannot rapidly fill the cavity formed between the outer polymeric layers, and moreover, cannot rapidly and fully penetrate or impregnate the fibrous layers. Accordingly, such prior art structural composites have employed only relatively lightweight, unidirectional fibrous layers, that can be more easily penetrated (or "wetted out") by the relatively viscous core materials in comparison to heavier, multi-directional fiber reinforcement layers. As a result, such prior art composite structures tend to be relatively weaker than otherwise desired and cannot be used to form primary structural parts or components. In addition, such prior art composite structures and methods have not proven to be cost effective for manufacturing parts in substantial quantities due to the relatively high cycle times required to allow the foam to expand, fill the core, and penetrate the fibrous layers.

Several other methods are known for manufacturing structural composites in various sizes and volumes for use in a number of technical fields and industries, including the automotive, marine, agricultural and recreational machinery, construction and manufactured housing, and industrial enclosure fields and industries. For example, U.S. Patent 5,588,392 to Bailey shows a resin transfer molding process for manufacturing a fiber-reinforced plastic boat hull; U.S. Patent 5,853,649 to Tisack et al. shows a method for manufacturing an interior automotive foam panel using a radio frequency electric field to promote bonding of the foam to the substrate; and U.S. Patent 5,972,260 to Manni shows a process for vacuum forming polyurethane mixed with a pentane blowing agent to manufacture flat insulating panels.

EP 1464 661 discloses a shape memory polymer composition, a fiber reinforced composition, and a production process thereof in which said polymer comprises a fibrous material and its molded shape and deformed shape can be switched by temperature control using heat.

EP 0 631 862 discloses a shaped thermoplastic composite panels for aircraft interiors. The panels contain reinforcing glass fibres and a heat resistant thermoplastic resin. The panel involves low pressure match mould shaping of he consolidated mat at an elevated temperature to create solid, lofted shaped panel. EP 0326 426 relates to plastic molded articles with a shape-memory property in which during production, molded article with the shape to be memorized is prepared first. Examples of molding techniques include melt molding, solution molding and the like. Injection molding, extrusion molding, compression molding and other methods can also be used as the melt molding technique. The molded articles prepared as above and then deformed retain the memory of their original shape.

US 4053548 relates to the use of reinforced plastics, preferably in a stamping operation. Glass reinforced polypropylene, containing 30 to 40% glass has been used in a stamping operation by heating the composite to a temperature above the melting point of polypropylenes, and then vacuum forming, molding, or stamping the composite into the required shape, cooling to retain dimensional stability and ejecting the part.

WO/0209935 discloses a process and equipment for manufacture of advanced composite structures. In the process, the component fabrication step includes a pre-processing and molding station. A pre-heat shuttle would be utilized to heat the laminate stack to the desired temperature and then rapidly shuttle the stack between the tools in the stamping press. The second station is a single stage heated stamping die will clamp the perimeter of the laminated sheet and stamp the component. After stamping, the stamping tool is rapidly cooled from 220C to below glass transition temperature, and then demoulded. EP 0 498 602 discloses a composite moulding and production process in which the composite molding comprises a heating member made of a thermoplastic polymer containing conductive particles therein and a base body formed of a thermosetting polynorbornene resin having retention of shape at the melting point of the thermoplastic polymer, said heating member and base body are formed integrally with each other.

Each process described above and elsewhere in the prior art is uniquely suited for distinctively different segments of various markets based upon the size of the finished part and the volume of demand for the finished part. Some processes are uniquely suited for producing large parts in low volumes, while other processes are uniquely suited for producing small parts in high volumes. As production volumes increase, the complexity of the machinery involved, and the corresponding pressure applied to that machinery, necessarily increases. Accordingly, when employing these prior art processes, the size of a part that can be formed in relatively high volumes correspondingly decreases because of the processing difficulties associated with molding relatively large parts under relatively higher pressures.

For example, it is known in the prior art to employ a fiberglass "spray-up" technology to form large parts having surface areas in the range of about 50-200 square feet. However, this technology has not proven to be economically feasible for producing high volumes of parts, such as in excess of 5,000 parts. Instead, resin transfer molding frequently has been used in the prior art to form relatively smaller parts in relatively higher volumes. For example, resin transfer molding typically has been used to manufacture parts having surface areas in the range of about 5-50 square feet, and in volumes of about 5,000-20,000 parts. Similarly, compression molding has been used in the prior art to form relatively smaller parts in relatively higher volumes. For example, compression molding typically has been used to manufacture parts having surface areas less than about 10 square feet, and in volumes of about 25, 000-50, 000 parts. To form parts in volumes greater than 50,000, the prior art typically has employed injection molding processes. Such processes, however, are generally limited to producing relatively smaller parts in comparison to the above-described processes.

Accordingly, one drawback associated with these and other prior art processes for manufacturing structural composites is the inability to manufacture relatively large parts, such as parts having surface areas greater than about 25 square feet, in relatively high volumes, in a commercially feasible manner.

Another drawback associated with these and other prior art methods for manufacturing structural composites, particularly fiber-reinforced polymeric composites with foam cores, is the difficulty in forming relatively large, thin-walled products that retain the composite's strength as well as a high-grade, cosmetic, impact and chemical resistant, weatherable exposed surface.

A manufacturing goal in the auto industry is to fabricate a composite component within a total cycle time of 60 seconds or less. This goal has been established in order to enable composites to be cost competitive for general acceptance into the auto industry and has been elusive.

Many attempts at achieving a cycle time of 60 seconds have been made. Most of these attempts have revolved around designing new resin systems with fast curing times. Previous attempts at reducing composite part cycle time have focused on developing new resin systems that can be cured rapidly. Such attempts have used different cure initiators and resins. Thermal cures have often been limited by the stability of the resin prior to infusion into the composite (the resin tends to cure at room temperature before it is applied in the mold) and/or the excessive heat generated by the resin cure process which can overheat the cured resin thereby degrading the mechanical properties of the composite. Alternative cure mechanisms have also been attempted such as light and electron beams. However, the ability to expose the composite through a mold and/or the cost of the radiation source has limited these manufacturing processes. In addition, these alternative cure mechanisms also result in heat generation during cure.

However, few, if any of these attempts have produced, repeatable quality parts quickly. Thus, there is a need for an invention that enables product developers and manufacturing engineers to use high performance composites in mass produced, cost sensitive products by reducing the cost of goods through reduced part cycle time while maintaining the strength to weight ratio of a high-performance composite. There is also a need to reduce component cycle time to a fraction of the auto industry goal of 60 seconds per part.

### SUMMARY OF THE INVENTION

This invention enables product developers and manufacturing engineers to use high performance composites in mass produced, cost sensitive products by reducing the cost of goods through reduced part cycle time while maintaining the strength to weight ratio of a high-performance composite. It is not unreasonable for the composite design combined with the manufacturing process to reduce component cycle time to a fraction of the auto industry goal of 60 seconds per part.
According, it has been provided a method according to claim 1.

Initially, sheets of preformed shape memory polymer composite are fabricated in a web process in which a shape memory polymer ("SMP") resin is infused into a 3D or 2D woven fabric and then cured. The preformed composite can be in any geometric shape, but is typically preformed in a flat square or rectangle shape. This process is well suited to mass production and does not require expensive molds or novel equipment. A similar process is currently used in the manufacture of prepreg composite panels.

The second step involves using one of the preformed SMP composite panels, cut to the appropriate size, heated above the glass transition temperature of the SMP prior to insertion into a mold. This allows the composite to be easily formed into a new three dimensional shapes which replicate the mold shapes. The heated composite is then moved into a mold and pressed, stamped or otherwise molded into its desired shape. The mold is held at a temperature below the glass transition temperature of the SMP so as to deactivate the composite to lock the composite in the deformed state. Since the SMP is a fully cross-linked and cured system, it does not have to cross-link or cure in the mold like conventional thermoset composites. The time to complete an entire molding cycle of a 0.95cm (.375") thick piece of SMP composite which has a T_{g} of 85°C (185 °F), initially heated to a temperature of 95°C (203 °F), with a mold held at 50°C (122°F), and reduce the SMP composite to below 85°C (185°F) so that it retains the mold shape is approximately 10 seconds or less. From this analysis, it can easily be seen that the auto industry's cycle time goal of 60 seconds is shattered.

Additional embodiments of the present invention include the use of other means of molding the composite patch and bonding said patch to the damaged part.

Other objects, features and advantages of the invention will be apparent from the following detailed description taken in connection with the examples and accompanying drawings and are within the scope of the present invention.

### BRIEF DESCRIPTION OF THE DRAWINGS

Fig. 1 is a perspective view of preformed shape memory polymer composite sheet that can be used in the present invention;

Fig. 2 is a perspective view of a press mold with a mold, an upper and lower press, and a piece of shape memory polymer composite ready for deformation;

Fig. 3 is a perspective view of the press mold while deforming the shape memory polymer composite;

Fig. 4 is a perspective view of the press mold after molding with the shape memory polymer composite deformed to replicate the shape of the mold; and

Fig. 5 is a expanded perspective view of shape memory polymer composite deformed to replicate the shape of the mold.

### DETAILED DESCRIPTION

Referring to the drawings in greater detail, the method of the invention herein is directed to fabricating and using a composite in a shape memory polymer resin matrix or other shape memory material in the manufacture of castable composite parts.

Examples 1 and 2 below describe the exemplary methods of creating pre-form shape memory polymer (SMP) composite parts. In general, the preferred SMP is a styrene copolymer based SMP as disclosed in U.S. Patent 6,759,481, however, other types of SMPs such as cyanate ester, polyurethane, polyethylene homopolymer, styrene-butadiene, polyisoprene, copolymers of stearyl acrylate and acrylic acid or methyl acrylate, norbornene or dimethaneoctahydronapthalene homopolymers or copolymers, malemide and other materials are within the scope of the present invention.

### Example 1

A polymeric reaction mixture was formulated by mixing vinyl neodecanoate (10%), divinyl benzene (0.8%), and styrene (85.2%) in random order to yield a clear solution. Benzoyl peroxide paste (4%) which is 50 % benzoyl peroxide, was then added to the resulting solution (all composition % are by weight). The resulting solution was kept cold in a refrigerator before use. To prepare the shape memory polymer resin matrix composite sheet, a piece of 3D weave carbon fiber is placed on a glass sheet, ensuring that there are no stray fibers and the carbon fiber piece is smooth. Next, pour some of the polymeric reaction mixture onto the carbon fiber. Use a plastic squeegee or plastic spreader to spread the resin evenly over the entire surface of the fabric. Thoroughly remove air bubbles and straighten the fabric. Place bleeder and breather fabric on top of the resin soaked carbon fiber. Then place the entire system in a high temperature vacuum bag with a vacuum valve stem and apply vacuum thoroughly, ensuring that there are no leaks. Cure the composite part with the following cycle: 1) A one-hour linear ramp to 75 °C in an oven, autoclave, or other form of controlled heating device; 2) A three-hour hold at 75°C; 3) A three-hour linear ramp to 90°C; 4) A two-hour linear ramp to 110°C; 5) A one-hour linear ramp to 20°C. After curing, remove from oven and allow to cool. Remove vacuum bag, bleeder fabric, breather fabric, and glass plates from composite.

### Example 2

A polymeric reaction mixture was formulated by mixing vinyl neodecanoate (10%), divinyl benzene (0.8%), and styrene (55.2%) in random order to form a colorless solution. Polystyrene granules (30%) were then added to the resulting solution. The resulting mixture was then allowed to sit at room temperature with occasional stirring until all the polystyrene granules were dissolved to give a clear, viscous solution. Benzoyl peroxide (4%) which is 50% benzoyl peroxide was then added to the resulting solution (all composition % are by weight). The resulting polymeric reaction mixture is continually stirred at or near 25°C, not to exceed 30°C until a clear solution is achieved which can take 2 hours or more. The resulting solution is kept cold in a refrigerator before use. To prepare the shape memory polymer resin matrix composite sheet, a piece of 3D weave carbon fiber is placed on a glass sheet, ensuring that there are no stray fibers and the carbon fiber piece is smooth. Next, pour some of the polymeric reaction mixture onto the carbon fiber. Use a plastic squeegee or plastic spreader to spread the resin evenly over the entire surface of the fabric. Thoroughly remove air bubbles and straighten the fabric. Place bleeder and breather fabric on top of the resin soaked carbon fiber. Then place the entire system in a high temperature vacuum bag with a vacuum valve stem and apply vacuum thoroughly, ensuring that there are no leaks. Cure the composite part with the following cycle: 1) A one-hour linear ramp to 75°C in an oven, autoclave, or other form of controlled heating device; 2) A three-hour hold at 75 ° C; 3) A three-hour linear ramp to 90°C; 4) A two-hour linear ramp to 110°C; 5) A one-hour linear ramp to 20°C. After curing, remove from oven and allow to cool. Remove vacuum bag, bleeder fabric, breather fabric, and glass plates from composite.

To achieve more than one fabric layer simply soak two or more layers of fabric in the shape memory polymer and stack on top of each other. The use of other fabrics such as carbon nano-fibers, spandex, chopped fiber, random fiber mat, fabric of any material, continuous fiber, fiberglass, or other type of textile fabric can be used to replace carbon fiber in the above examples. In Example 2 it is essential that while mixing after the addition of benzyl peroxide that the temperature of the resin be maintained below 30°C as the mixture may become hot and explosive. Mixing in a cold water or ice bath ensures the temperature will not exceed 30°C. It can take two hours or more to fully mix. It is to be appreciated that the transition temperature of SMP resin can be tailored to specific requirements by the addition of other agents as disclosed in US Patent 6,759,481.

Additionally, once cured, the shape memory polymer composite can be deformed for easy storage, shipping, or immediate use. If deformed for storage or shipping, simply activating the shape memory polymer resin will restore the composite part to its original, memorized shape.

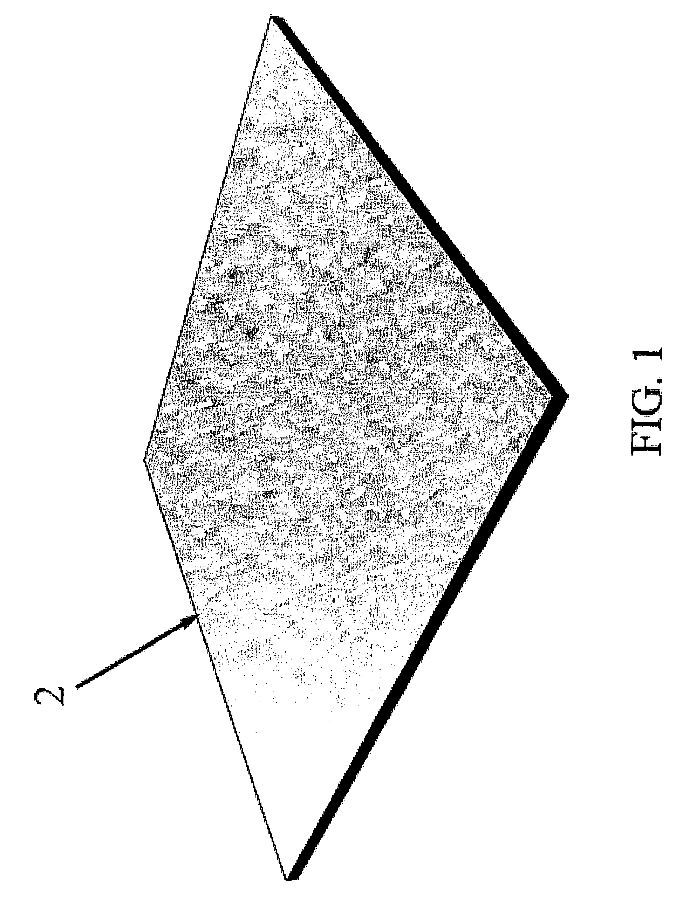

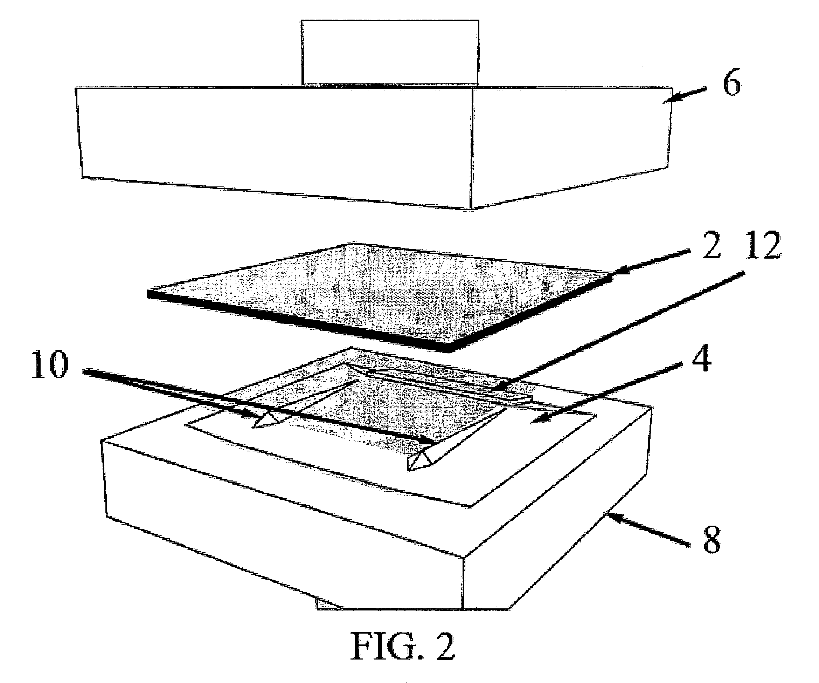

Referring to the drawings, Fig. 1 shows a flat, square, preformed piece of shape memory polymer ("SMP") composite preformed into its memorized shape, **2.** Once heated the SMP composite preform can be inseted into a mold as shown in Fig. 2. In the exemplary process the SMP composite preform will be molded by stamping. Fig. 2. shows the stamp mold with an upper part, **6,** and a lower part, **8.** Additionally, there is a mold, **4,** with raised features, **10,** and a back panel, **12,** which are to be replicated in the SMP composite preform, **2.** The mold, **4,** is a simple design for a car hood. In order to ensure adequate molding, the SMP composite preform, **2,** is heated above its transition temperature in order to make the SMP composite soft and pliable. It is to be appreciated that different activation methods could be used if appropriate to the type of SMP employed in the composite preform. For example, if the SMP resin used is light activated, instead of the typical heat activated SMP, the SMP composite preform can be made soft and pliable by exposure to certain light or other electromagnetic radiation.

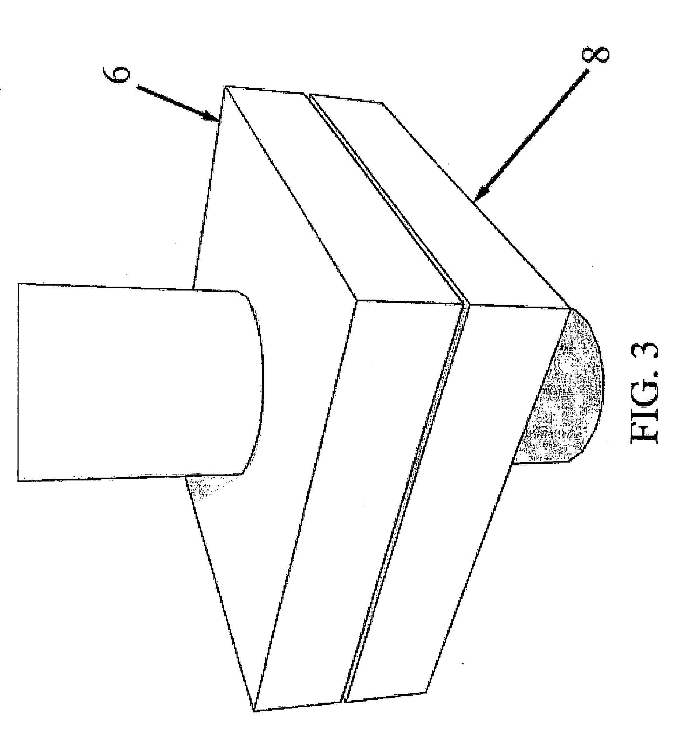

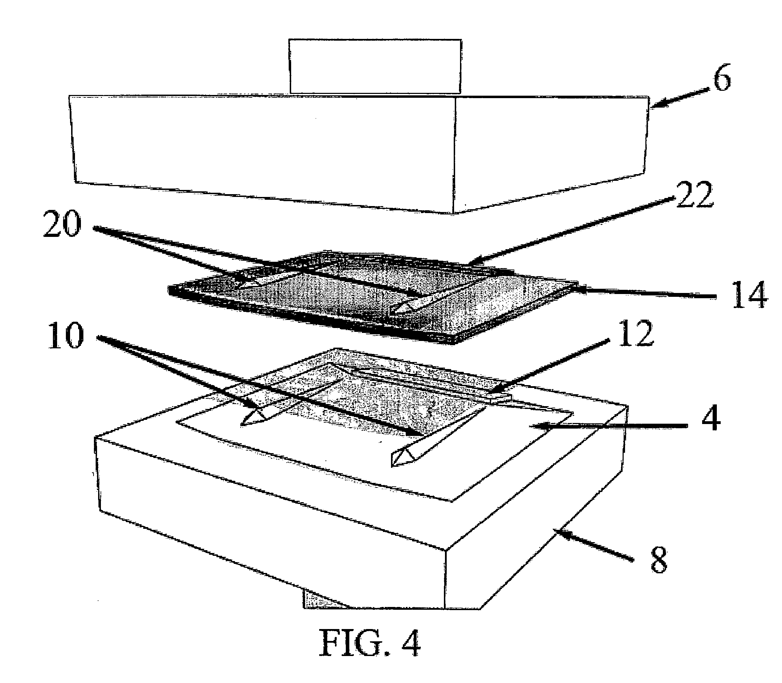

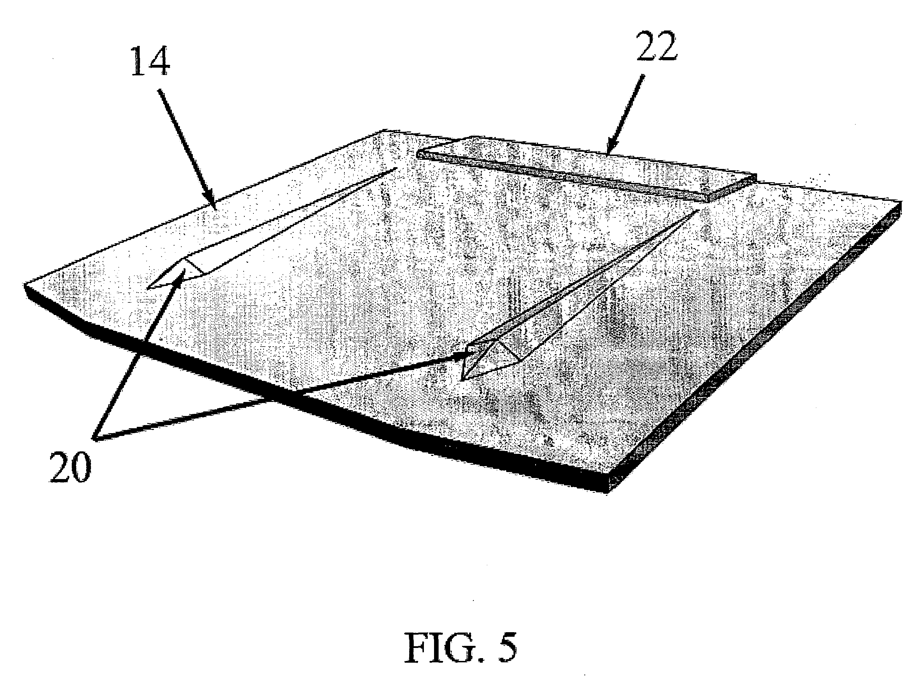

Once the SMP composite preform is soft, the mold can be stamped as shown in Fig. 3 where the upper portion, **6,** and lower portion, **8,** of the stamping machine are compressed together. In the exemplary method, the upper and lower portions of the machine are kept at a temperature that is significantly less that the transition, or activation, temperature of the SMP composite such that while the upper and lower portions are compressed together the SMP composite quickly cools to below its transition temperature so that when the upper and lower portions are returned to their original positions, the composite material retains the shape of the mold, **4.** This result is shown in Fig. 4 where the upper portion, **6,** and the lower portion, **8,** have returned to their original positions and the deformed composite, **14,** retains the features and shape of mold, **4.** As can be seen in Fig. 4, the deformed composite has essentially replicated the shape of mold, **4.** The raised parts, **20,** of the deformed composite, **14,** essentially replicate the raised parts, **10,** of mold, **4.** Additionally, the back panel, **22,** essentially replicates the back panel, **12,** of mold **4.** Fig. 5 shows a enlarged view of the final, deformed composite shape. It is to be appreciated that if the SMP used is light activated that the deformed composite part should not be removed from the mold until the SMP has been deactivated by the application of light or other electromagnetic radiation as required to ensure the composite part becomes hard and will retain the desired mold shape. It is also to be appreciated that other molding process such as draping, hand lay-up, overbraid, coating, painting, dripping, die casting, extrusion, annealing, vacuum forming, and computer aided technology may be used to mold the SMP composite to a desired shape.

The entire process from initial heating to removal of the final product from the stamping machine can take as little as between 5 and 10 seconds. While the exemplary method uses car hoods as an example of a manufactured part, it is to be appreciated that this process can be used to manufacture any number of simple or complex parts including car bumpers, parts of household appliances, boat hulls, any door, structural deployment devices for remote systems, games and toys, domestic articles, arts and ornamentation units, medical and paramedical instruments and devices, thermosensitive instruments and security devices, office equipment, garden equipment, educative articles, tricks, jokes and novelty items, building accessories, hygiene accessories, automotive accessories, films and sheets for retractable housings and packaging, coupling material for pipes of different diameters, building games accessories, folding games, scale model accessories, bath toys, boots and shoes inserts, skiing accessories, suction-devices for vacuum cleaners, pastry-making accessories, camping articles, adaptable coat hangers, retractable films and nets, sensitive window blinds, isolation and blocking joints, fuses, alarm devices, sculpture accessories, adaptable hairdressing accessories, plates for braille that can be erased, medical prosthesis, orthopedic devices, furniture, deformable rulers, recoverable printing matrix, formable casts/braces, shoes (soles/in soles), form-fitting spandex, form-fitting clothes, self-ironing clothes, self-fluffing pillow, deployable structures (watertowers), and pipe replacement for underground applications. It is to be appreciated that once removed from the mold the composite material can be further machined or worked with to provide for attachment to other manufacture parts, painted, or cut to remove excess material.

Because of the properties inherent in shape memory polymers, composites utilizing shape memory polymer as the resin matrix can be temporarily softened, reshaped, and rapidly hardened in real-time to function in a variety of structural configurations. They can be fabricated with nearly any type of fabric, and creative reinforcements can result in dramatic shape changes in functional structures and they are machinable.

Therefore, it can readily be seen that the present invention provides a quick and easy way to utilize composite and shape memory polymer technology to create manufactured parts with a preform composite material that has the flexibility of duct tape with the performance of composites and similar metal substances.

It is therefore apparent that in one exemplary embodiment, a process is provided for manufacturing a composite product. The process involves the step of preforming a composite material into a desired shape such as a rectangle, square, triangle, sphere, rolled or other geometric memorized shape. The preformed composite material is composed of at least one layer of fibrous material that is contained or embedded within a matrix formed of shaped memory polymer. The shape memory polymer resin is activated such that the preformed composite material becomes soft. The shape memory polymer resin is then deformed into the desired deformational state such as that of a mold shape or the like. The composite is then deactivated so that it retains its desired mold shape.

In one exemplary embodiment of the invention, the deactivation results from reducing the temperature of the shape memory polymer to a temperature that is less than its glass transition temperature and maintaining the shape memory polymer at such temperature for a time sufficient to lock the composite into its desired deformed state.

A variety of fibrous materials can be used in accordance with the invention including carbon nano-fibers, carbon fiber, spandex, chopped fiber, random fiber matte, fabric of any material, continuous fiber, fiberglass or other type of textile fabrics may be utilized.

In yet another exemplary embodiment of the invention, the shape memory polymer resin may consist of a styrene shape memory polymer, cyanate ester shape memory polymer, maleamide shape memory polymer, epoxy shape memory polymer, or other shape memory polymer. In some instances, it will be advantageous to utilize a thermoset resin as the shape memory polymer.

In a further exemplary embodiment, a thermal energy generation means may be embedded into the composite material. Such thermal energy generation means may comprise thermally conductive fibers or electrical conductors or the like.

In yet another exemplary embodiment of the invention, the activation of the shape memory polymer is achieved by heating the shape memory polymer resin to a temperature above its transition temperature. Such heating may be achieved via inductive heating, hot air, or heat lamps or the like, or the heating could be achieved by applying electrical current to thermal energy generation means that are embedded within the polymer.

In another exemplary embodiment of the invention, the activation of the shape memory polymer is achieved by application of electromagnetic radiation thereto. The electromagnetic radiation may, for example, be in the form of visible or ultraviolet light.

The deformation of the preformed composite material may be achieved by a variety of means including mechanical means such as a press roll, or by drawing the material through a rolling die mold.

In yet another exemplary embodiment of the invention, the deactivation of the shape memory polymer resin may be accomplished by reducing the temperature of the shape memory polymer to a temperature below its activation temperature. The reduction of temperature of the shape memory polymer may be accomplished while press molding the composite. Additionally, deactivation of the shape memory polymer resin may be achieved by application of electromagnetic radiation, such as the above mentioned visible light or ultraviolet light electromagnetic radiation.

## Claims (Claims for the following Contracting State(s): AT, DR, BG, CH, CY, CZ, DK, CE, ES, FI, GR, HU, IF, IS, IT, LI, LT, LU, MC, NL, PL, PT, RO, SE, SI SK, TR)

1. A process for manufacturing composite products comprising:
a. preforming a composite material into a desired shape wherein said preformed composite material is composed of at least one layer of fibrous material contained in a shape memory polymer resin matrix;
b. activating said shape memory polymer resin such that said preformed composite material becomes soft;
c. deforming said preformed composite material to a desired mold shape; and
d. deactivating said composite material so that it retains said desired mold shape.

2. A process as recited in claim 1 wherein said step of deactivating comprises reducing the temperature of said shape memory polymer to a temperature that is less than its glass transition temperature.

3. The method of claim 1 wherein said fibrous material is carbon nano- fibers, carbon fiber, spandex, chopped fiber, random fiber mat, fabric of any material, continuous fiber, fiberglass, or other type of textile fabric.

4. The method of claim 1 wherein said shape memory polymer resin consists of a styrene shape memory polymer, cyanate ester shape memory polymer, maleamide shape memory polymer, epoxy shape memory polymer, or other shape memory polymer; preferably said shape memory polymer is a thermoset resin.

5. The method of claim 1 wherein said composite material comprises an embedded thermal energy generation means; preferably said embedded thermal energy generation means comprises:
• thermally conductive fibers, or
• an electrical conductor.

6. The method of claim 1 wherein said activation of said shape memory polymer is achieved by heating said shape memory polymer resin to a temperature above its transition temperature.

7. The method of claim 6 wherein said heating is:
• by inductive heating, 1
• by hot air,
• by heat lamps, or
• by applying electrical current to an embedded thermal energy generation means.

8. The method of claim 1 wherein said activation of said shape memory polymer is achieved by application of electromagnetic radiation;preferably said electromagnetic radiation is visible light or ultraviolet light.

9. The method of claim 1 wherein said deforming of said preformed composite material is by mechanical means; preferably said deforming is accomplished:
• in a press mold, or
• by drawing material through a rolling die mold.

10. The method of claim 1 wherein said deactivation of said shape memory polymer resin is by reducing the temperature of said shape memory polymer below its activation temperature, preferably said reducing the temperature of said shape memory polymer is accomplished while press molding said composite.

11. The method of claim 1 wherein said deactivation of said shape memory polymer resin is by application of electromagnetic radiation, preferably said aid electromagnetic radiation is visible light or ultraviolet light.

12. A composite material for manufacturing composite products, the composite material comprises of at least one layer of fibrous material contained in a shape memory polymer resin matrix.

13. The composite material of claim 12, wherein said fibrous material is carbon nano-fibers, carbon fiber, spandex, chopped fiber, random fiber mat, fabric of any material, continuous fiber, fiberglass, or other type of textile fabric.

14. The composite material of claim 12, wherein said shape memory polymer resin consists of a styrene shape memory polymer, cyanate ester shape memory polymer, maleamide shape memory polymer, epoxy shape memory polymer, or other shape memory polymer; preferably said shape memory polymer is a thermoset resin.

## Claims (Claims for the following Contracting State(s): FR, DR, GD)

1. A process for manufacturing composite products comprising:
a. preforming a composite material into a desired shape wherein said preformed composite material is composed of at least one layer of fibrous material contained in a shape memory polymer resin matrix;
b. activating said shape memory polymer resin such that said preformed composite material becomes soft;
c. deforming said preformed composite material to a desired mold shape; and
d. deactivating said composite material so that it retains said desired mold shape,
**characterized in that**
the activation of said shape memory polymer is achieved by beating performed by applying electrical current to thermal energy generation means that are embedded within the polymer.

2. A process as recited in claim 1 wherein said step of deactivating comprises reducing the temperature of said shape memory polymer to a temperature that is less than its glass transition temperature.

3. The method of claim 1 wherein said fibrous material is carbon nano- fibers, carbon fiber, spandex, chopped fiber, random fiber mat, fabric of any material, continuous fiber, fiberglass, or other type of textile fabric.

4. The method of claim 1 wherein said shape memory polymer resin consists of a styrene shape memory polymer, cyanate ester shape memory polymer, maleamide shape memory polymer, epoxy shape memory polymer, or other shape memory polymer; preferably said shape memory polymer is a thermoset resin.

5. The method of claim 1 wherein said embedded thermal energy generation means comprises:
• thermally conductive fibers, or
• an electrical conductor.

6. The method of claim 1 wherein said activation of said shape memory polymer is achieved by heating said shape memory polymer resin to a temperature above its transition temperature.

7. The method of claim 1 wherein said deforming of said preformed composite material is by mechanical means; preferably said deforming is accomplished:
• in a press mold, or
• by drawing material through a rolling die mold.

8. The method of claim 1 wherein said deactivation of said shape memory polymer resin is by reducing the temperature of said shape memory polymer below its activation temperature, preferably said reducing the temperature of said shape memory polymer is accomplished while press molding said composite.

9. The method of claim 1 wherein said deactivation of said shape memory polymer resin is by application of electromagnetic radiation, preferably said electromagnetic radiation is visible light or ultraviolet light.

## Patentansprüche (Patentansprüche für folgende(n) Vertragsstaat(en): AT, DR, BG, CH, CY, CZ, DK, CE, ES, FI, GR, HU, IF, IS, IT, LI, LT, LU, MC, NL, PL, PT, RO, SE, SI SK, TR)

1. Verfahren zur Herstellung von Verbundprodukten, umfassend:
a. Vorformen eines Verbundmaterials in eine gewünschte Form, wobei genanntes vorgeformtes Verbundmaterial aus mindestens einer Lage eines faserigen Materials besteht, das in einer Formgedächtnispolymerharzmatrix enthalten ist;
b. Aktivieren des genannten Formgedächtnispolymerharzes, so dass genanntes vorgeformtes Verbundmaterial weich wird;
c. Verformen des genannten vorgeformten Verbundmaterials zu einer gewünschten Gießform; und
d. Deaktivieren des genannten Verbundmaterials, so dass es die gewünschte Gießform beibehält.

2. Verfahren gemäß Anspruch 1, bei dem genannter Schritt der Deaktivierung die Verminderung der Temperatur des genannten Formgedächtnispolymers auf eine Temperatur umfasst, die geringer ist als seine Glasübergangstemperatur.

3. Verfahren gemäß Anspruch 1, bei dem genanntes faseriges Material Kohlenstoff-Nanofasern, Kohlefasern, Elastan, geschnittene Fasern, regellose Fasermatten, Gewebe aus jeglichem Material, kontinuierliche Fasern, Glasfasern oder andere Arten von Textilgeweben sind.

4. Verfahren gemäß Anspruch 1, bei dem genanntes Formgedächtnispolymerharz aus einem Styrol-Formgedächtnispolymer, Cyanatester-Formgedächtnispolymer, Maleamid-Formgedächtnispolymer, Epoxy-Formgedächtnispolymer oder einem anderen Formgedächtnispolymer besteht; vorzugsweise ist genanntes Formgedächtnispolymer ein duroplastisches Harz.

5. Verfahren gemäß Anspruch 1, bei dem genanntes Verbundmaterial ein eingebettetes Mittel zur Erzeugung von thermischer Energie umfasst; vorzugsweise umfassen genannte eingebettete Mittel zur Erzeugung von thermischer Energie Folgendes:
• thermisch leitfähige Fasern oder
• einen elektrischen Leiter.

6. Verfahren gemäß Anspruch 1, bei dem die genannte Aktivierung des genannten Formgedächtnispolymer durch Erhitzen des genannten Formgedächtnispolymerharzes auf eine Temperatur oberhalb seiner Übergangstemperatur erreicht wird.

7. Verfahren gemäß Anspruch 6, wobei genanntes Erhitzen erfolgt durch:
• induktives Erhitzen,
• heiße Luft,
• Heizlampen, oder
• durch Anlegen eines elektrischen Stroms an ein eingebettetes Mittel zur Erzeugung von thermischer Energie.

8. Verfahren gemäß Anspruch 1, bei dem die genannte Aktivierung des genannten Formgedächtnispolymers durch Anwendung von elektromagnetischer Strahlung erreicht wird, vorzugsweise ist genannte elektromagnetische Strahlung sichtbares Licht oder ultraviolettes Licht.

9. Verfahren gemäß Anspruch 1, bei dem genanntes Verformen des genannten vorgeformten Verbundmaterials mittels mechanischer Mittel erfolgt; vorzugsweise wird genanntes Verformen folgendermaßen erreicht:
• in einer Pressform oder
• durch Ziehen von Material durch eine Rollwalzform.

10. Verfahren gemäß Anspruch 1, bei dem genannte Deaktivierung von genanntem Formgedächtnispolymerharz durch Verringerung der Temperatur des genannten Formgedächtnispolymers unterhalb seiner Aktivierungstemperatur erfolgt; vorzugsweise wird genannte Verringerung der Temperatur des genannten Formgedächtnispolymers beim Pressformen von genanntem Verbund erreicht.

11. Verfahren gemäß Anspruch 1, bei dem die genannte Deaktivierung des genannten Formgedächtnispolymerharzes durch Anwendung von elektromagnetischer Strahlung erfolgt; vorzugsweise ist genannte elektromagnetische Strahlung sichtbares Licht oder ultraviolettes Licht.

12. Verbundmaterial zur Herstellung von Verbundprodukten, wobei das Verbundmaterial aus mindestens einer Lage eines faserigen Materials besteht, das in einer Formgedächtnispolymerharzmatrix enthalten ist.

13. Verbundmaterial gemäß Anspruch 12, bei dem genanntes faseriges Material Kohlenstoff-Nanofasern, Kohlefasern, Elastan, geschnittene Fasern, regellose Fasermatten, Gewebe aus jeglichem Material, kontinuierliche Fasern, Glasfasern oder andere Arten von Textilgeweben sind.

14. Verbundmaterial gemäß Anspruch 12, bei dem genanntes Formgedächtnispolymerharz aus einem Styrol-Formgedächtnispolymer, Cyanatester-Formgedächtnispolymer, Maleamid-Formgedächtnispolymer, Epoxy-Formgedächtnispolymer oder einem anderen Formgedächtnispolymer besteht; vorzugsweise ist genanntes Formgedächtnispolymer ein duroplastisches Harz ist.

## Patentansprüche (Patentansprüche für folgende(n) Vertragsstaat(en): FR, DR, GD)

1. Verfahren zur Herstellung von Verbundprodukten, umfassend:
a. Vorformen eines Verbundmaterials in eine gewünschte Form, wobei genanntes vorgeformtes Verbundmaterial aus mindestens einer Lage eines faserigen Materials besteht, das in einer Formgedächtnispolymerharzmatrix enthalten ist;
b. Aktivieren des genannten Formgedächtnispolymerharzes, so dass genanntes vorgeformtes Verbundmaterial weich wird;
c. Verformen des genannten vorgeformten Verbundmaterials zu einer gewünschten Gießform; und
d. Deaktivieren des genannten Verbundmaterials, so dass es die gewünschte Gießform beibehält,
**dadurch gekennzeichnet, dass:**
die Aktivierung des genannten Formgedächtnispolymers durch Erhitzen erreicht wird, das durch Anlegen von elektrischem Strom an in dem Polymer eingebetteten Mittel zur Erzeugung von thermischer Energie durchgeführt wird.

2. Verfahren gemäß Anspruch 1, bei dem genannter Schritt der Deaktivierung die Verminderung der Temperatur des genannten Formgedächtnispolymers auf eine Temperatur umfasst, die geringer ist als seine Glasübergangstemperatur.

3. Verfahren gemäß Anspruch 1, bei dem genanntes faseriges Material Kohlenstoff-Nanofasern, Kohlefasern, Elastan, geschnittene Fasern, regellose Fasermatten, Gewebe aus jeglichem Material, kontinuierliche Fasern, Glasfasern oder andere Arten von Textilgeweben sind.

4. Verfahren gemäß Anspruch 1, bei dem genanntes Formgedächtnispolymerharz aus einem Styrol-Formgedächtnispolymer, Cyanatester-Formgedächtnispolymer, Maleamid-Formgedächtnispolymer, Epoxy-Formgedächtnispolymer oder einem anderen Formgedächtnispolymer besteht; vorzugsweise ist genanntes Formgedächtnispolymer ein duroplastisches Harz ist.

5. Verfahren gemäß Anspruch 1, bei dem genanntes eingebettetes Mittel zur Erzeugung von thermischer Energie folgendes umfasst:
• thermisch leitfähige Fasern oder
• einen elektrischen Leiter.

6. Verfahren gemäß Anspruch 1, bei dem die genannte Aktivierung des genannten Formgedächtnispolymer durch Erhitzen des genannten Formgedächtnispolymerharzes auf eine Temperatur oberhalb seiner Übergangstemperatur erreicht wird.

7. Verfahren gemäß Anspruch 1, bei dem genanntes Verformen des genannten vorgeformten Verbundmaterials mittels mechanischer Mittel erfolgt; vorzugsweise wird genanntes Verformen folgendermaßen erreicht:
• in einer Pressform oder
• durch Ziehen von Material durch eine Rollwalzform.

8. Verfahren gemäß Anspruch 1, bei dem genannte Deaktivierung von genanntem Formgedächtnispolymerharz durch Verringerung der Temperatur des genannten Formgedächtnispolymers unterhalb seiner Aktivierungstemperatur erfolgt; vorzugsweise wird genannte Verringerung der Temperatur des genannten Formgedächtnispolymers beim Pressformen von genanntem Verbund erreicht.

9. Verfahren gemäß Anspruch 1, bei dem die genannte Deaktivierung des genannten Formgedächtnispolymerharzes durch Anwendung von elektromagnetischer Strahlung erfolgt; vorzugsweise ist genannte elektromagnetische Strahlung sichtbares Licht oder ultraviolettes Licht.

## Revendications (Revendications pour l'(les) Etat(s) contractant(s) suivant(s): AT, DR, BG, CH, CY, CZ, DK, CE, ES, FI, GR, HU, IF, IS, IT, LI, LT, LU, MC, NL, PL, PT, RO, SE, SI SK, TR)

1. Procédé de fabrication de produits composites, qui comprend :
a. le préformage d'un matériau composite en une forme souhaitée, ledit matériau composite préformé étant composé d'au moins une couche de matériau fibreux contenue dans une matrice de résine polymère à mémoire de forme ;
b. l'activation de ladite résine polymère à mémoire de forme, de manière à ce que ledit matériau composite préformé devienne mou ;
c. la déformation dudit matériau composite en une forme de moule souhaitée ; et
d. la désactivation dudit matériau composite de manière à ce qu'il conserve ladite forme de moule souhaitée.

2. Procédé selon la revendication 1, dans lequel ladite étape de désactivation comprend la réduction de la température dudit polymère à mémoire de forme à une température qui est inférieure à sa température de transition vitreuse.

3. Procédé selon la revendication 1, dans lequel ledit matériau fibreux est des nano-fibres de carbone, une fibre de carbone, le spandex, une fibre coupée, un mat de fibre aléatoire, un tissu en toute matière, une fibre continue, une fibre de verre, ou tout autre type de textile.

4. Procédé selon la revendication 1, dans lequel ladite résine polymère à mémoire de forme est constituée par un polymère de styrène à mémoire de forme, un polymère d'ester de cyanate à mémoire de forme, un polymère de maléamide à mémoire de forme, un polymère d'époxy à mémoire de forme, ou tout autre polymère à mémoire de forme ; de préférence ledit polymère à mémoire de forme est une résine thermodurcie.

5. Procédé selon la revendication 1, dans lequel ledit matériau composite comprend des moyens de génération d'énergie thermique intégrés ; de préférence lesdits moyens de génération d'énergie thermique intégrés comprennent :
- des fibres thermo-conductrices, ou
- un conducteur électrique.

6. Procédé selon la revendication 1, dans lequel ladite activation dudit polymère à mémoire de forme est réalisée par chauffage de ladite résine polymère à mémoire de forme à une température au-dessus de sa température de transition.

7. Procédé selon la revendication 6, dans lequel ledit chauffage est :
- par chauffage à induction,
- par air chaud,
- par lampes chaudes, ou
- par application de courant électrique à des moyens de génération d'énergie thermique intégrés.

8. Procédé selon la revendication 1, dans lequel ladite activation dudit polymère à mémoire de forme est réalisée par application d'un rayonnement électromagnétique ; de préférence ledit rayonnement électromagnétique est la lumière visible ou la lumière ultraviolette.

9. Procédé selon la revendication 1, dans lequel ladite déformation dudit matériau composite préformé est réalisée par des moyens mécaniques ; de préférence ladite déformation est réalisée :
- dans un moule de pressage, ou
- par étirage du matériau dans un moule de matrice roulant.

10. Procédé selon la revendication 1, dans lequel ladite désactivation de ladite résine polymère à mémoire de forme est réalisée par réduction de la température dudit polymère à mémoire de forme en-dessous de sa température d'activation, de préférence, ladite réduction de la température dudit polymère à mémoire de forme est réalisée pendant le moulage à la presse dudit composite.

11. Procédé selon la revendication 1, dans lequel ladite désactivation de ladite résine polymère à mémoire de forme est réalisée par application d'un rayonnement électromagnétique ; de préférence ledit rayonnement électromagnétique est la lumière visible ou la lumière ultraviolette.

12. Matériau composite pour la fabrication de produits composites, le matériau composite comprenant au moins une couche de matériau fibreux contenue dans une matrice de résine polymère à mémoire de forme.

13. Matériau composite selon la revendication 12, dans lequel ledit matériau fibreux est des nano-fibres de carbone, une fibre de carbone, le spandex, une fibre coupée, un mat de fibre aléatoire, un tissu en toute matière, une fibre continue, une fibre de verre, ou tout autre type de textile.

14. Procédé selon la revendication 12, dans lequel ladite résine polymère à mémoire de forme est constituée par un polymère de styrène à mémoire de forme, un polymère d'ester de cyanate à mémoire de forme, un polymère de maléamide à mémoire de forme, un polymère d'époxy à mémoire de forme, ou tout autre polymère à mémoire de forme ; de préférence ledit polymère à mémoire de forme est une résine thermodurcie.

## Revendications (Revendications pour l'(les) Etat(s) contractant(s) suivant(s): FR, DR, GD)

1. Procédé de fabrication de produits composites, qui comprend :
a. le préformage d'un matériau composite en une forme souhaitée, ledit matériau composite préformé étant composé d'au moins une couche de matériau fibreux contenue dans une matrice de résine polymère à mémoire de forme ;
b. l'activation de ladite résine polymère à mémoire de forme, de manière à ce que ledit matériau composite préformé devienne mou ;
c. la déformation dudit matériau composite en une forme de moule souhaitée ; et
d. la désactivation dudit matériau composite de manière à ce qu'il conserve ladite forme de moule souhaitée,
**caractérisé en ce que**
l'activation dudit polymère à mémoire de forme est réalisée par chauffage par application d'un courant électrique à des moyens de génération d'énergie thermique qui sont intégrés à l'intérieur du polymère.

2. Procédé selon la revendication 1, dans lequel ladite étape de désactivation comprend la réduction de la température dudit polymère à mémoire de forme à une température qui est inférieure à sa température de transition vitreuse.

3. Procédé selon la revendication 1, dans lequel ledit matériau fibreux est des nano-fibres de carbone, une fibre de carbone, le spandex, une fibre coupée, un mat de fibre aléatoire, un tissu en toute matière, une fibre continue, une fibre de verre, ou tout autre type de textile.

4. Procédé selon la revendication 1, dans lequel ladite résine polymère à mémoire de forme est constituée par un polymère de styrène à mémoire de forme, un polymère d'ester de cyanate à mémoire de forme, un polymère de maléamide à mémoire de forme, un polymère d'époxy à mémoire de forme, ou tout autre polymère à mémoire de forme ; de préférence ledit polymère à mémoire de forme est une résine thermodurcie.

5. Procédé selon la revendication 1, dans lequel ledit matériau composite comprend des moyens de génération d'énergie thermique intégrés ; de préférence lesdits moyens de génération d'énergie thermique intégrés comprennent :
- des fibres thermo-conductrices, ou
- un conducteur électrique.

6. Procédé selon la revendication 1, dans lequel ladite activation dudit polymère à mémoire de forme est réalisée par chauffage de ladite résine polymère à mémoire de forme à une température au-dessus de sa température de transition.

7. Procédé selon la revendication 1, dans lequel ladite déformation dudit matériau composite préformé est réalisée par des moyens mécaniques ; de préférence ladite déformation est réalisée :
- dans un moule de pressage, ou
- par étirage du matériau dans un moule de matrice roulant.

8. Procédé selon la revendication 1, dans lequel ladite désactivation de ladite résine polymère à mémoire de forme est réalisée par réduction de la température dudit polymère à mémoire de forme en-dessous de sa température d'activation, de préférence, ladite réduction de la température dudit polymère à mémoire de forme est réalisée pendant le moulage à la presse dudit composite.

9. Procédé selon la revendication 1, dans lequel ladite désactivation de ladite résine polymère à mémoire de forme est réalisée par application d'un rayonnement électromagnétique ; de préférence ledit rayonnement électromagnétique est la lumière visible ou la lumière ultraviolette.
